# EUROPEAN PATENT SPECIFICATION

(11) **EP 3 334 098 B1**
(45) Date of publication and mention of the grant of the patent: **21.07.2021**
(21) Application number: 16203009.2
(22) Date of filing: 08.12.2016
(51) Int. Cl.: H04L 12/46

(54) **METHOD, COMMUNICATION WEB SERVICE, WEB SERVER, AND CLIENT FOR PROVIDING NETWORK COMMUNICATION SERVICE BETWEEN IP DEVICES VIA THE INTERNET**
VERFAHREN, KOMMUNIKATIONSWEBDIENST, WEBSERVER UND CLIENT ZUR BEREITSTELLUNG EINES NETZWERKKOMMUNIKATIONSDIENSTES ZWISCHEN IP-VORRICHTUNGEN ÜBER DAS INTERNET
PROCÉDÉ, SERVICE WEB DE COMMUNICATION, SERVEUR WEB ET CLIENT POUR FOURNIR UN SERVICE DE COMMUNICATION RÉSEAU ENTRE DES DISPOSITIFS IP PAR INTERNET

(43) Date of publication of application: 13.06.2018
(73) Proprietor: Siemens Schweiz AG, 8047 Zürich (CH)
(72) Inventor: Käslin, Beat, 6333 Hünenberg See (CH); Rösli, Patrick, 6048 Horw (CH)
(74) Representative: Maier, Daniel Oliver

(56) References cited:
- EP-A2- 2 755 097
- US-B1- 7 634 555
- RALF MESSERSCHMIDT ET AL: "Integrated web services and tunneling enabling field bus communication via heterogeneous (wide area) networks", INDUSTRIAL INFORMATICS (INDIN), 2010 8TH IEEE INTERNATIONAL CONFERENCE ON, IEEE, PISCATAWAY, NJ, USA, 13 July 2010 (2010-07-13), pages 543-548, XP031733677, ISBN: 978-1-4244-7298-7

## Description

### FIELD OF THE INVENTION

The present invention relates generally to the technical field of building management systems or building automation systems comprising a plurality of building devices, e.g. IP devices or fieldbus devices. In particular the present invention relates to a method, a communication web service, a web server, and a client for providing network communication between IP devices via the Internet.

### BACKGROUND

A building automation system is an arrangement for monitoring, open-loop control, and/or closed-loop control of process variables in complex technical systems in a building, or in a campus comprising a number of buildings. A building automation system typically operates heating, ventilation and air-conditioning systems, lighting and shading devices and also access control, security and fire surveillance systems. In the building automation system, process variables - such as room air conditioning variables or events, for example - are detected, evaluated, monitored, influenced or generated, with the energy consumption of the building or campus also advantageously being optimized by the building automation system.

Generally, a building automation system encompasses and operates a plurality of IP devices or field devices, such as sensors and actuators. Examples of typical field devices are temperature and humidity sensors, air quality sensors, pressure sensors, flow meters, electricity meters, heat meters, brightness sensors, fire alarms, intrusion alarms, alarm or sprinkler devices, drives for hot water valves, thermostat valves, ventilation flaps or blinds, light switches, smart card readers or devices for detecting biometric data. The building automation system typically comprises a plurality of software modules, processes or programs, and in general, a number of computers or processors for their activation and also as a rule a plurality of open-loop and closed-loop control devices as well as further devices, for example devices for linking the building automation system to external communication networks and graphical user interfaces having screens for viewing and analysis of captured signals, video and data from monitored and/or controlled points or elements within the building automation system.

IP devices or IP-based devices are connected via an IP-network (e.g. LAN) based on the Internet Protocol (IP). Fieldbus devices are connected via the respective underlying fieldbus protocol, e.g. Modbus, KNX, or M-Bus. A fieldbus can be coupled to an IP network. A building automation system typically comprises IP devices and fieldbus devices, both of them acting as building automation devices.

Often there is a need that IP devices assigned to different and distant IP networks have to communicate. Furthermore in building automation, various IP-based software tools are used for engineering, configuration, maintenance, browsing data, optimizations, data archiving, etc. These tools (e.g. engineering tools) were designed to be used within the same network as the IP devices or fieldbus devices. To save travel costs and reaction time, secured and controlled remote access to the sites (e.g. buildings) where the IP devices or fieldbus devices are physically installed is desired.

The European patent application EP2755097A2 discloses a process data gateway for communication of process data between process data-client and process data-server, wherein a web socket server is configured to accept requests for reading or writing process data according to a process data protocol to provide a simple communication of process data between the process data-client and the process data-server of an automation system.

Remote tool access today is accomplished by introducing a virtual private network (VPN) connection from the engineering office (where the tools are located) to the site (building, where the respective IP devices or fieldbus devices are located). VPN connections between IP devices located in different networks require special Hardware installation on site for VPN router and a dedicated firewall configuration to allow inbound traffic on VPN ports. Furthermore multiple VPN connections must be initiated to provide access to various sites.

### SUMMARY OF THE INVENTION

The object of the invention is to provide an easy to install and easy to use communication service between IP devices located in different IP networks, and especially to provide an easy to install and easy to use communication service between tools and fieldbus devices located in different networks.

This object will be achieved by a method for providing network communication between IP devices via the Internet as defined in Claim 1.

This object will be further achieved by a communication web service (CCL) for providing communication service between IP devices via the Internet as defined in Claim 8.

The object is also achieved by a web server as defined in Claim 13.

The object is also achieved by a client as defined in Claim 14.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: illustrates a known VPN communication mechanism between building automation devices located in different networks;
- FIG 2: illustrates a first exemplary communication scenario between IP devices located in different networks using a communication web service (CCL);
- FIG 3: illustrates a second exemplary communication scenario between IP devices located in different networks using a communication web service (CCL);
- FIG 4: illustrates an exemplary flow chart for a method for providing network communication between IP devices via the Internet; and
- FIG 5: illustrates an exemplary web server, configured to host a communication web service (CCL) for providing communication service for IP devices via Internet.

### DETAILED DESCRIPTION

Today building automation objects or field devices of a building automation system are widely dispersed throughout a facility or even in different facilities. For example, an HVAC system includes temperature sensors and ventilation damper controls as well as other elements that are located in virtually every area of a facility. Similarly, a security system may have intrusion detection, motion sensors and alarm actuators dispersed throughout an entire building or campus. Likewise, fire safety systems include smoke alarms and pull stations dispersed throughout the facility. To achieve efficient and effective building automation system operation, there is a need to monitor the operation of, and often communicate with, the various dispersed building automation objects or field devices (e.g. sensors or actors) of a building automation system.

Electrical or wireless communication media are used in a building automation system for the exchange of data of individual devices or parts of systems, as a rule a number of communication networks exist, with cables, optical data communication channels, ultrasound connections, electromagnetic near fields or radio networks able to be used, including fiber optic networks or cellular networks for example. Examples of technologies or standards able to be used for the said data exchange are BACnet, LON or LonWorks® from the company ECHELON, the European Installation bus EIB, KONNEX, ZigBee or PROFIBUS defined by German standard DIN 19245. BACnet refers to the ANSI/ASHRAE 135-2008 building communication protocol standard, titled "BACnet, A Data Communication Protocol For Building Automation And Control Networks" (2008). Fieldbus devices can also be connected via M-Bus (European Standards EN 13757-2 and EN 13757-3), wireless M-Bus (European Standard EN 13757-4), Modbus (IEC 61158), or other fieldbus protocols.

Building automation systems typically have one or more centralized control stations in which data from each of the dispersed building automation objects or field devices in the system may be monitored and in which various aspects of system operation may be controlled and/or monitored. The control station typically includes a computer having processing equipment, data storage equipment, and a user interface. To allow for monitoring and control of the dispersed building automation objects or field devices, building automation systems often employ multi-level communication networks to communicate operational and/or alarm information between operating elements, such as sensors and actuators, and the centralized control station.

One example of a building automation system control station is the APOGEE® INSIGHT® Workstation, available from Siemens Industry, Inc. of Buffalo Grove, Ill., which may be used with the model APOGEE® building automation system, also available from Siemens Industry, Inc. (APOGEE and INSIGHT are U.S federally registered trademarks of Siemens Industry, Inc.) In this system, several control stations, connected via an Ethernet or another type of network, may be distributed throughout one or more building locations, each having the ability to monitor and control system operation. As a consequence, different people in different locations of the facility may monitor and control building operations.

There is a need that building automation objects or field devices of a building automation system which are located in different networks can communicate. Furthermore there is a need that software based tools for e.g. engineering, configuration, maintenance, browsing data, optimizations, or data archiving of building automation objects or field devices have remote access to the respective objects or devices.

Remote tool access today is accomplished by introducing a virtual private network (VPN) connection from the engineering office to the site (building).

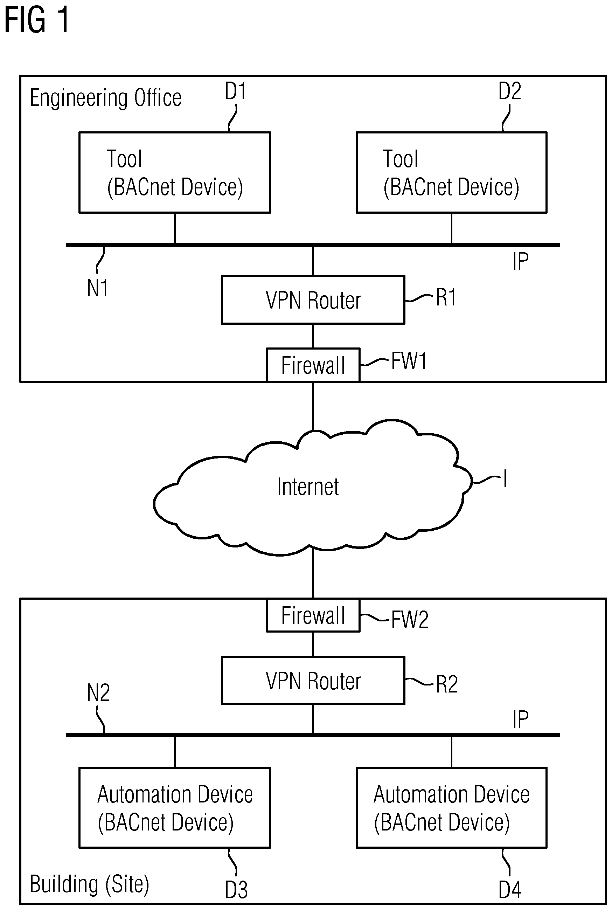

Figure 1 illustrates a known VPN communication mechanism between exemplary BACnet devices located in different networks. In Figure 1 the tools D1 and D2 are nodes of network N1 and realized as BACnet devices, e.g. capable for engineering, configuration, maintenance, browsing data, optimizations, or data archiving of automation devices D3, D4 which are also realized as BACnet devices. In Figure 1 the automation devices D3, D4 are nodes of network N2. The networks N1, N2 are realized as IP networks using the Internet Protocol (IP). According the illustration in figure 1 the network N1 comprising the tools D1, D2 is located in an engineering office, and the network N1 comprising the automation devices D3, D4 is located in a building (site). Each of the networks N1, N2 has a respective VPN router R1, R2 and a respective firewall FW1, FW2 for a communication via Internet (I).

The solution with VPN mechanism has the following drawbacks:
- Special HW Installation on site required for VPN Router. This is increasing HW-costs.
- Device configuration required. This means higher installation efforts.
- Firewall configuration required to allow inbound traffic on VPN port.
- A VPN mechanism provides access to the whole network in a building. This can be a security issue.
- Multiple VPN connections must be initiated to access various sites.
- Respective firewalls must be configured on either engineering office or building site to enable VPN connection.

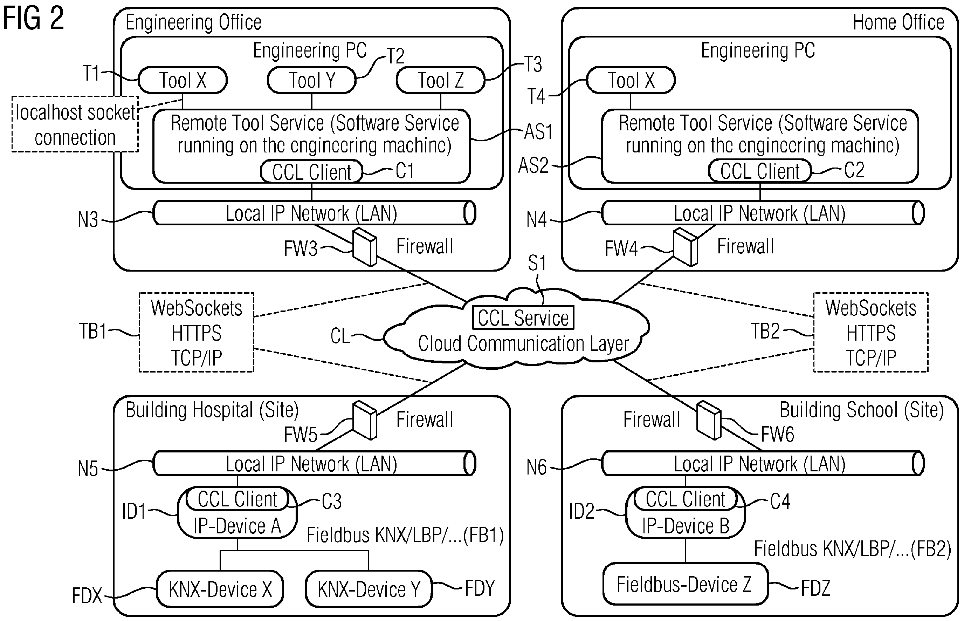

Figure 2 illustrates a first exemplary communication scenario between IP devices located in different networks using a communication web service (CCL). The communication web service CCL (Cloud Communication Layer) provides communication service for IP devices via the Internet. IP devices are devices which are capable to communicate based on the Internet Protocol (IP), for example based on TCP/IP, IPv4, or IPv6. The communication web service CCL is implemented by using one or more servers S1. Advantageously the one or more servers S1 are implemented in a cloud infrastructure CL.

The communication web service (CCL) is configured to be accessed by an adapter service AS1, AS2 of a local IP network N3, N4 via an outbound HTTPS-connection to a pre-defined URL (Uniform Resource Locator) pointing to a web server S1 which provides the communication web service (CCL), wherein said adapter service AS1, AS2 is acting as a gateway for fieldbus tools T1 - T4 located in the local IP network N3, N4. Furthermore the communication web service (CCL) is configured to be accessed by a gateway IP device ID1, ID2 of a further local IP network N5, N6 via an outbound HTTPS-connection to the pre-defined URL pointing to the web server S1 which provides the communication web service (CCL), wherein the gateway IP device ID1, ID2 is interfaced to a fieldbus FB1, FB2 connecting fieldbus devices FDX, FDY, FDZ.

The communication web service (CCL) can also be accessed by an IP device ID1, ID2 which is configured to be acting as a gateway of a further local IP network N5, N6. The IP device ID1, ID2 which acts as a gateway provides the outbound HTTPS-connection to the pre-defined URL pointing to the web server S1.

The communication web service (CCL) provides a tunnel connection between the adapter service AS1, AS2 and a fieldbus device FDX, FDY, FDZ to enable a fieldbus tool T1 - T4 having access to a fieldbus device FDX, FDY, FDZ.

The fieldbus devices FDX, FDY, FDZ can be sensors or actuators. Examples of typical field devices are temperature and humidity sensors, air quality sensors, pressure sensors, flow meters, electricity meters, heat meters, brightness sensors, fire alarms, intrusion alarms, alarm or sprinkler devices, drives for hot water valves, thermostat valves, ventilation flaps or blinds, light switches, smart card readers or devices for detecting biometric data.

In the exemplary scenario illustrated in figure 2 the fieldbus devices FDX, FDY are connected by the exemplary fieldbus FB1 with IP-Device A (ID1). IP-Device A (ID1) is a node or subscriber of the local IP network N5 (e.g. a LAN). The local IP network N5 is installed and located in an exemplary hospital site.

In the exemplary scenario illustrated in figure 2 the fieldbus device FDZ is connected by the exemplary fieldbus FB2 with IP-Device B (ID2). IP-Device B (ID2) is a node or subscriber of the local IP network N6 (e.g. a LAN). The local IP network N6 is installed and located in an exemplary school site.

IP-Device A (ID1) is a gateway IP device for local IP network N5 and IP-Device B (ID2) is a gateway IP device for local IP network N6. The local IP networks N5, N6 can have more than one gateway IP devices in each case. The communication web service (CCL) can be accessed by the gateway IP devices ID1, ID2 by an outbound HTTPS-connection to the pre-defined URL pointing to the web server S1 hosting the communication web service (CCL).

In the exemplary scenario illustrated in figure 2 the local IP network N3 is located in an exemplary engineering office. The exemplary engineering office has one or more engineering computers (e.g. engineering PC) with tools T1 - T3 for configuring and/or engineering fieldbus devices. Often the fieldbus devices FDX, FDY, FDZ are located in remote sites and in remote and different networks. In figure 2 the tools T1 - T3 are installed on an exemplary engineering PC (Personal Computer). A tool can be for instance an ETS (Engineering Tool Software) for planning and configuring KNX systems comprising KNX devices. The exemplary engineering PC can also comprise tools for configuring further or other fieldbus devices, e.g. fieldbus devices which are used in a M-Bus-System or in a Modbus-System.

The engineering PC is a node of the local IP network N3. The engineering PC comprises the adapter service AS1 which is acting as a gateway for the fieldbus device engineering or configuring tools T1 - T3 in the local IP network N3. Advantageously the adapter service AS1 is implemented as a software program which can be started if an Internet connection is required. The adapter service AS1 is configured to initiate an outbound HTTPS-connection to a pre-defined URL pointing to the web server S1 which provides the communication web service (CCL). The communication web service (CCL) is creating a tunnel connection between the adapter service AS1 and one or more fieldbus devices FDX, FDY, FDZ located in remote sites. Therefore the fieldbus tools T1 - T3 have access to the respective fieldbus devices. A tool user can operate from any place as long as he has got access to the Internet I.

In the exemplary scenario illustrated in figure 2 the local IP network N4 is located in an exemplary home office. The exemplary home office has one or more engineering computers (e.g. engineering PC) with tool T4 for configuring and/or engineering fieldbus devices. The engineering PC of the home office is a node of the local IP network N4. The engineering PC comprises the adapter service AS2 which is acting as a gateway for the exemplary fieldbus device configuring tool T4 in the local IP network N4. Advantageously the adapter service AS2 is implemented as a software program which can be started if an Internet connection is required. The adapter service AS2 could also be implemented as firmware.

The adapter service AS2 is configured to initiate an outbound HTTPS-connection to a pre-defined URL pointing to the web server S1 which provides the communication web service (CCL). The communication web service (CCL) is creating a tunnel connection between the adapter service AS2 and one or more fieldbus devices FDX, FDY, FDZ located in remote sites. Therefore the fieldbus device configuring tool T4 has access to the respective fieldbus devices, which can be located in remote sites.

The tools T1 - T4 are used for engineering, configuration, maintenance, browsing data, optimizations, data archiving, etc. The tools T1 - T4 can be located in a remote engineering office or a home office. These tools T1 - T4 have remote access to the fieldbus devices via the communication web service CCL.

The firewalls FW3 - FW6 need only to be configured to let outbound traffic (out of one of the networks N3 - N6) pass. The firewalls FW3 - FW6 require no configuration for inbound traffic (into one of the networks N3 - N6).

The adapter services AS1, AS2, and the gateway IP-Devices ID1, ID2 are configured to act as clients C1 - C4 regarding the communication web service (CCL) hosted by one or more web server S1.

Advantageously a client C1 - C4 is configured to initiate an outbound HTTPS-connection to a pre-defined URL pointing to the web server S1 which provides a communication web service (CCL) hosted by the server S1, and wherein a client C1 - C4 is acting as a gateway for providing access to the respective IP network N3 - N6. The communication web service (CCL) can be implemented based on a classic client-server-arcitecture.

Advantageously the client C1, C2 is acting as a gateway for fieldbus tools T1 - T4 in the respective IP network N3, N4 to have access to the Internet. In engineering environments the client can be realized as adapter service AS1, AS2 running on an Engineering PC (Personal Computer, laptop, etc.) within the respective IP network N3, N4.

Advantageously the client C3, C4 is a gateway IP device ID1, ID2 in an IP network N5, N6, wherein the gateway IP device is interfaced to a fieldbus FB1, FB2 connecting fieldbus devices FDX, FDY, FDZ.

The text boxes TB1, TB2 indicate by which technical means and/or protocols the communication web service (CCL) can be accessed by the clients C1 - C4: WebSockets, HTTPS, TCP/IP.

Advantageously the communication web service CCL is hosted on one or more servers S1 outside of the IP devices ID1, ID2. Advantageously the communication web service CCL is hosted on one or more servers S1 outside of the Engineering PC. Advantageously the one or more servers S1 hosting the communication web service CCL and providing this communication service to IP devices are implemented in a cloud computing infrastructure.

On building sites building automation devices (e.g. IP devices, fieldbus devices) are used e.g. for controlling HVAC functionality. The tools for engineering or configuring the fieldbus automation devices can be located in a remote engineering office or a home office. These tools have remote access to the fieldbus automation devices via the communication web service CCL.

Advantageously the communication web service CCL is based on in-memory data grid frameworks and/or on persistency frameworks. An in-memory data base uses primarily the main memory (RAM, random access memory; especially non-volatile RAM) of a computer system for data storage. This allows fast data access times. A data grid framework or a data grid architecture makes it possible to have access to geographically distributed data, even scattered over different networks. An in-memory data grid framework can be used be used for distributed data storage or distributed data processing.

In computer technology a persistency (or persistence) framework supports and automates storing of data. For example a persistence framework moves data to and from a permanent data storage. Normally a persistency (or persistence) framework is realized as middleware software.

Advantageously one of the IP device ID1, ID2 is a building automation device and is a node of a local building automation network N5, N6, and said building automation device is configured to be acting as a gateway device (IP device) for further IP devices of the local building automation network N5, N6. In figure 2 the networks N5, N6 are in each case located on a building site (e.g. hospital or school) and the automation respective IP device ID1, ID2 is acting as a gateway to the Internet I. Via this gateway further IP devices or fieldbus devices of the respective network N5, N6 have access to the communication web service CCL. The communication web service CCL is acting as a communication mechanism to provide communication between IP devices located in different networks.

Advantageously the communication web service CCL provides communication services for more than one local building automation networks N3 - N5, wherein in each of the local building automation networks N3 - N6 one of the building automation IP devices D5 - D9 is configured to be acting as a gateway IP device for further IP devices of the respective local building automation network N3 - N6. So it is possible that the communication web service CCL provides communication between different network topologies.

Advantageously the communication web service (CCL) is configured to maintain a list of access rights that define which users have access to which building automation network N3 - N6. This allows that different levels of access can be assigned to different users or user groups.

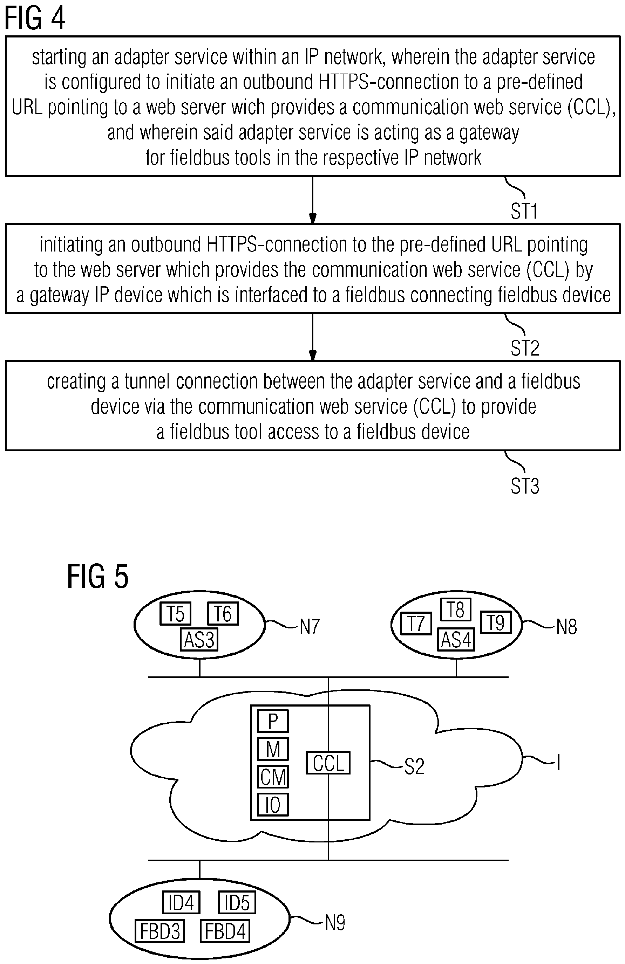

Advantageously the communication web service (CCL) provides a web-based user interface (IO, see figure 5) to manage the access rights by a user. For example an authorized user can manage the access rights via a web browser.

The communication web service (CCL) is realized as a software service that is hosted on one or more servers S1 outside of the participating components. This means that neither the IP devices ID1, ID2 nor the Engineering PC (hosting the tools) are used to implement the communication web service (CCL). From both the site and engineering office respectively home office, outbound WebSocket connections are used only. No special firewall rules are required since standard firewalls FW3 - FW6 are configured to let outbound HTTPS traffic pass. Advantageously the CCL service maintains a connection proxy and adds the unique device address to an internal list of accessible IP devices ID1, ID2.

Advantageously the communication web service (CCL) maintains a list of access rights that define what tool users have access to which building automation network N5, N6. This list of access rights can be managed by a web user interface or by other means of the communication web service (CCL). If the user is granted access to the local building automation network the user is establishing a connection between the tool T1 - T4 and the gateway IP device ID1, ID2. If the connection is established, the CCL web service provides access to the fieldbus FB1, FB2. Since all gateway devices ID1, ID2 initiate the connection to the communication web service (CCL), they are permanently connected and keep up their connection as long as they are connected to the Internet. There is no need for a special inbound firewall rule that would expose any server ports of the site.

By introducing a communication web service (CCL) that is hosted on one or more servers S1 outside of the participating components, no VPN or direct IP connections are required anymore. From both, the site and engineering office, only outbound WebSocket connections are used.

The basic idea of the underlying invention is that a device in a local IP network initiates an outbound HTTPS connection to a pre-defined URL that points to a web server which provides a communication web service (CCL). No special firewall rules are required since standard firewalls are configured to let outbound HTTPS traffic pass.

Many 3^{rd} party engineering tools for engineering fieldbus devices do exist, e.g. ETS for engineering of KNX fieldbus devices). These are given tools and it is not possible to change the application. To support these tools (means to give these tools access to remotely located fieldbus devices) an independent service AS1, AS2 (adapter service) is activated and running on the same machine (e.g. Engineering PC) as the respective tool T1 - T4 is running.

This "Remote Tool Service" AS1, AS2 initiates an outbound HTTPS connection to the same CCL Service. The user selects a Site on the Remote Tool Service Interface. The "Remote Tool Service" AS1, AS2 creates a tunnel to the selected IP device ID1, ID2 and provides sockets on localhost for the tools T1 - T2.

The tools T1 - T4 connect to the sockets provided by the respective Remote Tool Service AS1, AS2. The service AS1, AS2 receives the data from the tools T1 - T4 and tunnels the protocols trough the WebSocket connection.

The tool user can operate from any place as long as he has got access to the Internet.

The communication web service (CCL) maintains a list of access rights which defines which users have access to a specific IP device ID1, ID2 or a specific fieldbus device FDX, FDY, FDZ. This list of access rights can be managed by a web user interface or by other means of the communication web service (CCL). If the user connects the adapter service AS1, AS2, connectivity between the tool T1 - T4 and the gateway IP device ID1, ID2 is established in the CCL service to provide access to the requested socket on the IP device ID1, ID2.

Since all gateway IP devices initiate the connection to the communication web service (CCL), and are permanently connected and kept up their connection as long as they are connected to the Internet, there is no need for a special inbound firewall rule that would expose any server ports of the site.

The communication web service (CCL) acts as a hub, switch, or reverseProxy and does not need to know any protocol details. The application layer communication for any device or tool is equal to the communication as if the tools and the devices were part of the same network or connected over VPN.

The communication web service (CCL) is able to forward any TCP and UDP traffic. With this setup it is possible for instance to engineer S-Mode objects on a remote KNX device with the ETS.

It is possible to open multiple tunnels to different devices at the same time.

The CCL service software is implemented to make use of software that is used in typical cloud computing environments. This allows scaling of the CCL service solution if the number of connected devices or tool connections exceeds the memory or computing power of a single server/node. The CCL service runs in a public or private cloud.

The CCL service software is not limited to interlink tools and IP devices. It can also be used to establish connections between IP devices, i.e. enhance an existing network of devices that are geographically disconnected (e.g. building B and building C).

The communication web service (CCL) especially saves travel costs and reaction time. Furthermore the communication web service (CCL) provides secured and controlled remote access to the sites.

In the first exemplary communication scenario illustrated in figure 2 the web service CCL is directly connected to the respective local IP networks N5, N6 located in the sites (exemplary hospital site, school site). This physical connection can be realized for example by suitable switches, bridges, or routers. The IP-Device A (ID1) and the IP-Device B (ID2) are acting in each case as gateways comprising the respective CCL clients C3, C4.

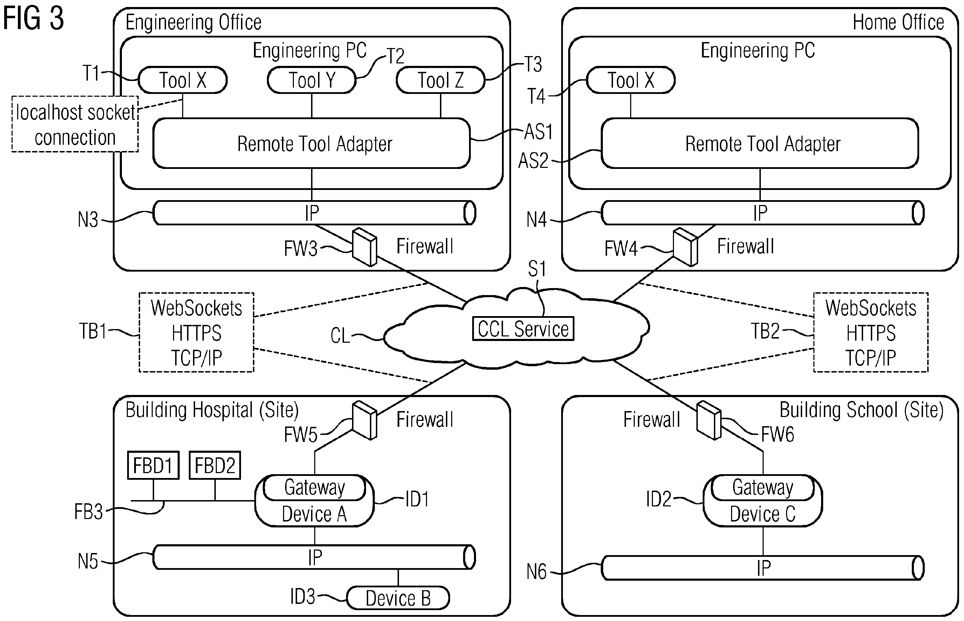

Figure 3 illustrates a second exemplary communication scenario between IP devices located in different networks using a communication web service (CCL). The communication scenario of figure 3 corresponds to the scenario described in figure 2. The difference is that in the second exemplary communication scenario illustrated in figure 3 the web service CCL is physically and logically connected to the respective local IP networks N5, N6 located in the sites (exemplary hospital site, school site) via the respective IP gateways devices ID1 (Device A) or ID2 (Device C). From the IP gateways devices ID1 (Device A) or ID2 (Device C) the HTTPS outbound connection to the communication web service (CCL) is established.

In the exemplary communication scenario illustrated in figure 3 Device A (ID1) is acting as a physical and logical gateway for the local IP network N5. Furthermore Device A (ID1) is connected to the fieldbus FB3 (e.g. KNX Bus). The field devices FBD1, FBD2 are connected to the fieldbus FB3.

Via the communication web service (CCL) an engineering tool T1 - T4 (e.g. ETS) has access to the respective fieldbus devices FBD1, FBD2. This enables a remote access e.g. to configure the respective fieldbus devices FBD1, FBD2.

Figure 4 illustrates an exemplary flow chart for a method for providing network communication between IP devices via the Internet, wherein the IP devices are located in different local IP networks, and wherein at least one of the IP devices is a gateway IP device connected to a fieldbus (e.g. KNX Bus). The method comprises the steps:
(ST1) starting an adapter service within an IP network, wherein the adapter service is configured to initiate an outbound HTTPS-connection to a pre-defined URL pointing to a web server which provides a communication web service (CCL), and wherein said adapter service is acting as a gateway for fieldbus tools in the respective IP network;
(ST2) initiating an outbound HTTPS-connection to the pre-defined URL pointing to the web server which provides the communication web service (CCL) by a gateway IP device which is interfaced to a fieldbus connecting fieldbus devices; and
(ST3) creating a tunnel connection between the adapter service and a fieldbus device via the communication web service (CCL) to provide a fieldbus tool access to a fieldbus device.

Advantageously the communication web service (CCL) provides communication services for one or more building automation networks. The communication web service (CCL) can provide hub- and/or switch-functionality between the participating networks. Advantageously the gateway IP device is a node of fieldbus network.

Advantageously the communication web service (CCL) provides multiple tunnels to different IP devices or different fieldbus devices at the same time. This increases the productivity of the users of the engineering tools.

Advantageously the communication web service (CCL) is hosted on one or more servers outside of the participating components (networks). The communication web service (CCL) can be implemented independently of the networks and the IP devices or fieldbus devices within the networks.

Advantageously the communication web service (CCL) is based on in-memory data grid frameworks and persistency frameworks. This allows a scalability of the communication web service (CCL) regarding the number of networks or IP devices to be connected and managed by the communication web service (CCL). Optionally the communication web service (CCL) can also be scaled or adapted regarding the number the fieldbus devices to be managed.

Advantageously the communication between any of the fieldbus tools and the respective fieldbus device is controlled by the communication web service (CCL). The controlling can be performed regarding the access rights of users of the engineering tools and/or regarding the current or expected traffic and/or regarding the current or expected access requests to fieldbus devices. The communication web service (CCL) controls this communication, for instance based on lists of access rights. Therefore the communication web service (CCL) controls which tool (e.g. engineering tool) has access to which local IP network and in each case to which fieldbus device.

Advantageously the communication web service (CCL) maintains a list of access rights that define which users have access to which IP device or fieldbus device. This allows that different levels of access can be assigned to different users or user groups.

Advantageously the list of access rights is managed by a web-based user interface. This enables an authorized user to manage the access rights from tools to fieldbus devices via a commercially available web browser.

The communication web service (CCL) can be realized as a software service that is hosted on one or more servers outside of the participating components. This means that the IP devices to be connected need not to be used to implement the communication web service (CCL).

Figure 5 illustrates an exemplary web server S2, configured to host a communication web service (CCL) for providing communication service between IP devices via the Internet I,
wherein the communication web service (CCL) is configured to be accessed by an adapter service AS3, AS4 of a local IP network N7, N8 via an outbound HTTPS-connection to a pre-defined URL pointing to the web server S2 which provides the communication web service (CCL), wherein said adapter service AS3, AS4 is acting as a gateway for fieldbus tools T5 - T9 located in the local IP network N7, N8; and
wherein the communication web service (CCL) is configured to be accessed by a IP device ID4, ID5 of a further local IP network N9 via an outbound HTTPS-connection to the pre-defined URL pointing to the web server S2 which provides the communication web service (CCL), wherein the IP device ID4, ID5 is interfaced to a fieldbus connecting fieldbus devices FBD3, FBD4; and
wherein the communication web service (CCL) is providing a tunnel connection between the adapter service AS3, AS4 and a fieldbus device FBD3, FBD4 to provide a fieldbus tool T5 - T9 access to a fieldbus device FBD3, FBD4.

The exemplary web server S2 comprises a processor P, a memory M, communication means CM, and input/output means IO. Advantageously the server S2 is implemented in a cloud infrastructure. For providing the communication web service (CCL) also more than one server S2 can be used.

The communication web service (CCL) provides the URL (Unique Resource Locator) which can be accessed by the IP devices D5, D6 and the respective adapter service AS3, AS4. The tools T5 - T9 can be engineering tools located e.g. in engineering offices.

Advantageously the fieldbus device FBD3, FBD4 are configured to control HVAC functionality in buildings.

The invention (method, web service, web server, client) provides especially the following advantages:
- No additional hardware installation required to allow VPN connection.
- No network or firewall configuration required (only outbound connections on standard HTTPS port).
- Advantageously access is granted based on user rights scheme (access list maintained in CCL).
- Centralized management of user access rights (access list maintained in CCL).
- Access from tool can be provided from any location, where Internet is available (only outbound connections on standard HTTPS port).
- Reduced complexity of the set-up leads to less training effort for installation and configuration engineers, which are normally no computer network experts. This means cost savings.
- Reduced complexity of the set-up leads to less errors or wrong configurations. This means less field support tickets.
- No firewall rule changes and no additional network hardware imply better customer acceptance and better compliance with IT security policies. This holds also for projects in security sensitive areas.
- In case of field issues it is possible to instantly change the access rights to building automation devices, at a central place in the CCL. This is required if the person that normally maintains the device is not available in the critical moment. This implies faster resolution of problems and a good reputation at the customer.

In summary, a method, a communication web service, a web server, and a client for providing communication service for IP devices via Internet are disclosed, wherein the communication web service (CCL) is configured to be accessed by an adapter service of a local IP network via an outbound HTTPS-connection to a pre-defined URL pointing to a web server which provides the communication web service (CCL), wherein said adapter service is acting as a gateway for fieldbus tools located in the local IP network; and wherein the communication web service (CCL) is further configured to be accessed by a gateway IP device of a further local IP network via an outbound HTTPS-connection to the pre-defined URL pointing to the web server which provides the communication web service (CCL), wherein the gateway IP device is interfaced to a fieldbus connecting fieldbus devices; and wherein the communication web service (CCL) is providing a tunnel connection between the adapter service and a fieldbus device to provide a fieldbus tool access to a fieldbus device.

### Reference Signs

- N1 - N9: Network
- D1 - D4: Device
- AS1 - AS4: Adapter Service
- FW1 - FW6: Firewall
- C1 - C4: Client
- CL: Cloud
- I: Internet
- T1 - T9: Tool
- ID1 - ID5: IP Device
- FDX, FDY, FDZ: Fieldbus Device
- FDB1 - FDB4: Fieldbus Device
- FB1 - FB3: Fieldbus
- S1 - S2: Server
- P: Processor
- M: Memory
- CM: Communication Means
- IO: Input/Output Means
- CCL: Cloud Communication Layer
- IP: Internet Protocol
- TB1 - TB2: Text Box
- ST1 - ST3: Step

## Claims

1. A method for providing network communication between IP devices (D1 - D6, ID1 - ID3) via the Internet (I), wherein the IP devices (D1 - D6, ID1 - ID3) are located in different local IP networks (N1 - N9), and wherein at least one of the IP devices (D1 - D6, ID1 - ID3) is a gateway IP device (ID1, ID2) connected to a fieldbus, the method comprising:
starting an adapter service (AS1 - AS4) within an IP network (N1 - N9), wherein the adapter service (AS1 - AS4) is configured to initiate an outbound HTTPS-connection to a pre-defined URL pointing to a web server (S1, S2) which provides a communication web service (CCL), and wherein said adapter service (AS1 - AS4) is acting as a gateway for fieldbus tools (T1 - T9) in the respective IP network (N1 - N9);
initiating an outbound HTTPS-connection to the pre-defined URL pointing to the web server (S1, S2) which provides the communication web service (CCL) by a gateway IP device (ID1, ID2) which is interfaced to a fieldbus (FB1 - FB3) connecting fieldbus devices (FDX, FDY, FDZ, FDB1 - FDB4); and
creating a tunnel connection between the adapter service and a fieldbus device (FDX, FDY, FDZ, FDB1 - FDB4) via the communication web service (CCL) to provide a fieldbus tool (T1 - T9) access to a fieldbus device (FDX, FDY, FDZ, FDB1 - FDB4) ;
wherein the communication web service (CCL) maintains a list of access rights that define which users have access to which fieldbus device (FDX, FDY, FDZ, FDB1 - FDB4),
wherein in case of field issues it is possible to instantly change the access rights to fieldbus devices (FDX, FDY, FDZ, FDB1 - FDB4), at a central place in the communication web service (CCL) by a centralized management of user access rights.

2. The method of claim 1, wherein the communication web service (CCL) provides multiple tunnels to different devices at the same time.

3. The method according to one of the preceding claims, wherein the gateway IP device is a node of a building automation IP network (N1 - N9).

4. The method according to one of the preceding claims, wherein the communication web service (CCL) is hosted on one or more servers (S1, S2) outside of the participating components.

5. The method according to one of the preceding claims, wherein the communication web service (CCL) is based on in-memory data grid frameworks and persistency frameworks.

6. The method according to one of the preceding claims, wherein the communication between any of the fieldbus tools (T1 - T9) and the respective fieldbus device (FDX, FDY, FDZ, FDB1 - FDB4) is controlled by the communication web service (CCL) .

7. The method according to one of the preceding claims, wherein the list of access rights is managed by a web-based user interface.

8. A communication web service (CCL) for providing communication service between IP devices via the Internet (I),
wherein the communication web service (CCL) is configured to be accessed by an adapter service (AS1 - AS4) of a local IP network via an outbound HTTPS-connection to a pre-defined URL pointing to a web server (S1, S2) which provides the communication web service (CCL), wherein said adapter service (AS1 - AS4) is acting as a gateway for fieldbus tools located in the local IP network (N1 - N9); and
wherein the communication web service (CCL) is configured to be accessed by a gateway IP device (ID1, ID2) of a further local IP network via an outbound HTTPS-connection to the pre-defined URL pointing to the web server (S1, S2) which provides the communication web service (CCL), wherein the gateway IP device (ID1, ID2) is interfaced to a fieldbus connecting fieldbus devices (FDX, FDY, FDZ, FDB1 - FDB4); and
wherein the communication web service (CCL) is providing a tunnel connection between the adapter service (AS1 - AS4) and a fieldbus device (FDX, FDY, FDZ, FDB1 - FDB4) to provide a fieldbus tool (T1 - T9) access to the fieldbus device (FDX, FDY, FDZ, FDB1 - FDB4);
wherein the communication web service (CCL) is configured to maintain a list of access rights that define which fieldbus tools (T1 - T9) have access to which fieldbus device (FDX, FDY, FDZ, FDB1 - FDB4),
wherein in case of field issues it is possible to instantly change the access rights to fieldbus devices (FDX, FDY, FDZ, FDB1 - FDB4), at a central place in the communication web service (CCL) by a centralized management of user access rights.

9. The communication web service according to claim 8, wherein the communication web service (CCL) is hosted on one or more servers (S1, S2) outside of the IP devices.

10. The communication web service according to claim 8 or claim 9, wherein the communication web service (CCL) is based on in-memory data grid frameworks and persistency frameworks.

11. The communication web service according to one of the claims 8 to 10, wherein the gateway IP device (ID1, ID2) is a node of a building automation IP network (N1 - N9).

12. The communication web service according to one of the claims 8 to 11, wherein the communication web service (CCL) provides multiple tunnels to different IP devices at the same time.

13. A web server (S1, S2), configured to host a communication web service (CCL) for providing communication service between IP devices via the Internet (I),
wherein the communication web service (CCL) is configured to be accessed by an adapter service (AS1 - AS4) of a local IP network via an outbound HTTPS-connection to a pre-defined URL pointing to the web server (S1, S2) which provides the communication web service (CCL), wherein said adapter service (AS1 - AS4) is acting as a gateway for fieldbus tools (T1 - T9) located in the local IP network; and
wherein the communication web service (CCL) is configured to be accessed by a gateway IP device of a further local IP network via an outbound HTTPS-connection to the pre-defined URL pointing to the web server (S1, S2) which provides the communication web service (CCL), wherein the gateway IP device is interfaced to a fieldbus connecting fieldbus devices (FDX, FDY, FDZ, FDB1 - FDB4); and
wherein the communication web service (CCL) is providing a tunnel connection between the adapter service (AS1 - AS4) and a fieldbus device (FDX, FDY, FDZ, FDB1 - FDB4) to provide a fieldbus tool (T1 - T9) access to the fieldbus device (FDX, FDY, FDZ, FDB1 - FDB4);
wherein the communication web service (CCL) is configured to maintain a list of access rights that define which fieldbus tools (T1 - T9) have access to which fieldbus device (FDX, FDY, FDZ, FDB1 - FDB4),
wherein in case of field issues it is possible to instantly change the access rights to fieldbus devices (FDX, FDY, FDZ, FDB1 - FDB4), at a central place in the communication web service (CCL) by a centralized management of user access rights.

14. A client (C1 - C4), configured to provide an adaptor service (AS1 - AS4) of a local IP network and to initiate an outbound HTTPS-connection to a pre-defined URL pointing to a web server (S1, S2) providing a communication web service (CCL), wherein the client (C1 - C4) is configured to act as a gateway connected to fieldbus devices (FDX, FDY, FDZ, FDB1 - FDB4) of the local IP network for providing a fieldbus tool located in a further local IP network access to the fieldbus devices (FDX, FDY, FDZ, FDB1 - FDB4) of the local IP network, and is further configured to create via the communication web service (CCL) a tunnel connection between the adaptor service (AS1 - AS4) and a fieldbus device (FDX, FDY, FDZ, FDB1 - FDB4).

15. The client (C1 - C4) according to claim 14, wherein the client (C1 - C4) is acting as a gateway for fieldbus tools (T1 - T9) in the respective local IP network.

16. The client (C1 - C4) according to claim 14, wherein the client is a gateway IP device in an IP network, wherein the gateway IP device (ID1, ID2) is interfaced to a fieldbus (FB1 - FB3) connecting the fieldbus devices (FDX, FDY, FDZ, FDB1 - FDB4).

## Patentansprüche

1. Verfahren zur Bereitstellung von Netzwerkkommunikation zwischen IP-Vorrichtungen (D1 - D6, ID1 - ID3) über das Internet (I), wobei sich die IP-Vorrichtungen (D1 - D6, ID1 - ID3) in verschiedenen lokalen IP-Netzwerken (N1 - N9) befinden und wobei wenigstens eine der IP-Vorrichtungen (D1 - D6, ID1 - ID3) eine Gateway-IP-Vorrichtung (ID1, ID2) ist, die an einen Feldbus angeschlossen ist, wobei das Verfahren umfasst:
Starten eines Adapterdienstes (AS1 - AS4) innerhalb eines IP-Netzwerks (N1 - N9), wobei der Adapterdienst (AS1 - AS4) dafür konfiguriert ist, eine ausgehende HTTPS-Verbindung zu einer vordefinierten URL zu initiieren, die auf einen Webserver (S1, S2) zeigt, welcher einen Kommunikationswebdienst (CCL) bereitstellt, und wobei der Adapterdienst (AS1 - AS4) als ein Gateway für Feldbus-Tools (T1 - T9) in dem jeweiligen IP-Netzwerk (N1 - N9) agiert;
Initiieren einer ausgehenden HTTPS-Verbindung zu der vordefinierten URL, die auf den Webserver (S1, S2) zeigt, welcher den Kommunikationswebdienst (CCL) bereitstellt, durch eine Gateway-IP-Vorrichtung (ID1, ID2), welche eine Schnittstelle mit einem Feldbus (FB1 - FB3) aufweist, der Feldbusvorrichtungen (FDX, FDY, FDZ, FDB1 - FDB4) verbindet; und
Erzeugen einer Tunnelverbindung zwischen dem Adapterdienst und einer Feldbusvorrichtung (FDX, FDY, FDZ, FDB1 - FDB4) über den Kommunikationswebdienst (CCL), um einem Feldbus-Tool (T1 - T9) Zugriff auf eine Feldbusvorrichtung (FDX, FDY, FDZ, FDB1 - FDB4) zu gewähren;
wobei der Kommunikationswebdienst (CCL) eine Liste von Zugriffsrechten führt, welche definieren, welche Benutzer Zugriff auf welche Feldbusvorrichtung (FDX, FDY, FDZ, FDB1 - FDB4) haben,
wobei es im Fall von Feldproblemen möglich ist, die Zugriffsrechte auf Feldbusvorrichtungen (FDX, FDY, FDZ, FDB1 - FDB4) an einem zentralen Ort in dem Kommunikationswebdienst (CCL) durch eine zentralisierte Verwaltung von Benutzerzugriffsrechten augenblicklich zu ändern.

2. Verfahren nach Anspruch 1, wobei der Kommunikationswebdienst (CCL) mehrere Tunnel zu verschiedenen Vorrichtungen gleichzeitig bereitstellt.

3. Verfahren nach einem der vorhergehenden Ansprüche, wobei die Gateway-IP-Vorrichtung ein Knoten eines Gebäudeautomations-IP-Netzwerks (N1 - N9) ist.

4. Verfahren nach einem der vorhergehenden Ansprüche, wobei der Kommunikationswebdienst (CCL) auf einem oder mehreren Servern (S1, S2) außerhalb der beteiligten Komponenten gehostet wird.

5. Verfahren nach einem der vorhergehenden Ansprüche, wobei der Kommunikationswebdienst (CCL) auf speicherresidenten Datenraster-Frameworks und Persistenz-Frameworks basiert.

6. Verfahren nach einem der vorhergehenden Ansprüche, wobei die Kommunikation zwischen einem beliebigen der Feldbus-Tools (T1 - T9) und der jeweiligen Feldbusvorrichtung (FDX, FDY, FDZ, FDB1 - FDB4) von dem Kommunikationswebdienst (CCL) gesteuert wird.

7. Verfahren nach einem der vorhergehenden Ansprüche, wobei die Liste von Zugriffsrechten von einer webbasierten Benutzerschnittstelle verwaltet wird.

8. Kommunikationswebdienst (CCL) zur Bereitstellung von Kommunikationsdienst zwischen IP-Vorrichtungen über das Internet (I),
wobei der Kommunikationswebdienst (CCL) dafür konfiguriert ist, dass ein Adapterdienst (AS1 - AS4) eines lokalen IP-Netzwerks über eine ausgehende HTTPS-Verbindung zu einer vordefinierten URL, die auf einen Webserver (S1, S2) zeigt, welcher den Kommunikationswebdienst (CCL) bereitstellt, auf ihn zugreift, wobei der Adapterdienst (AS1 - AS4) als ein Gateway für Feldbus-Tools, die sich in dem lokalen IP-Netzwerk (N1 - N9) befinden, agiert; und
wobei der Kommunikationswebdienst (CCL) dafür konfiguriert ist, dass eine Gateway-IP-Vorrichtung (ID1, ID2) eines weiteren lokalen IP-Netzwerks über eine ausgehende HTTPS-Verbindung zu der vordefinierten URL, die auf den Webserver (S1, S2) zeigt, welcher den Kommunikationswebdienst (CCL) bereitstellt, auf ihn zugreift, wobei die Gateway-IP-Vorrichtung (ID1, ID2) eine Schnittstelle mit einem Feldbus aufweist, der Feldbusvorrichtungen (FDX, FDY, FDZ, FDB1 - FDB4) verbindet; und
wobei der Kommunikationswebdienst (CCL) eine Tunnelverbindung zwischen dem Adapterdienst (AS1 - AS4) und einer Feldbusvorrichtung (FDX, FDY, FDZ, FDB1 - FDB4) bereitstellt, um einem Feldbus-Tool (T1 - T9) Zugriff auf die Feldbusvorrichtung (FDX, FDY, FDZ, FDB1 - FDB4) zu gewähren;
wobei der Kommunikationswebdienst (CCL) dafür konfiguriert ist, eine Liste von Zugriffsrechten zu führen, welche definieren, welche Feldbus-Tools (T1 - T9) Zugriff auf welche Feldbusvorrichtung (FDX, FDY, FDZ, FDB1 - FDB4) haben,
wobei es im Fall von Feldproblemen möglich ist, die Zugriffsrechte auf Feldbusvorrichtungen (FDX, FDY, FDZ, FDB1 - FDB4) an einem zentralen Ort in dem Kommunikationswebdienst (CCL) durch eine zentralisierte Verwaltung von Benutzerzugriffsrechten augenblicklich zu ändern.

9. Kommunikationswebdienst nach Anspruch 8, wobei der Kommunikationswebdienst (CCL) auf einem oder mehreren Servern (S1, S2) außerhalb der IP-Vorrichtungen gehostet wird.

10. Kommunikationswebdienst nach Anspruch 8 oder Anspruch 9, wobei der Kommunikationswebdienst (CCL) auf speicherresidenten Datenraster-Frameworks und Persistenz-Frameworks basiert.

11. Kommunikationswebdienst nach einem der Ansprüche 8 bis 10, wobei die Gateway-IP-Vorrichtung (ID1, ID2) ein Knoten eines Gebäudeautomations-IP-Netzwerks (N1 - N9) ist.

12. Kommunikationswebdienst nach einem der Ansprüche 8 bis 11, wobei der Kommunikationswebdienst (CCL) mehrere Tunnel zu verschiedenen IP-Vorrichtungen gleichzeitig bereitstellt.

13. Webserver (S1, S2), welcher dafür konfiguriert ist, einen Kommunikationswebdienst (CCL) zur Bereitstellung von Kommunikationsdienst zwischen IP-Vorrichtungen über das Internet (I) zu hosten,
wobei der Kommunikationswebdienst (CCL) dafür konfiguriert ist, dass ein Adapterdienst (AS1 - AS4) eines lokalen IP-Netzwerks über eine ausgehende HTTPS-Verbindung zu einer vordefinierten URL, die auf den Webserver (S1, S2) zeigt, welcher den Kommunikationswebdienst (CCL) bereitstellt, auf ihn zugreift, wobei der Adapterdienst (AS1 - AS4) als ein Gateway für Feldbus-Tools (T1 - T9), die sich in dem lokalen IP-Netzwerk befinden, agiert; und
wobei der Kommunikationswebdienst (CCL) dafür konfiguriert ist, dass eine Gateway-IP-Vorrichtung eines weiteren lokalen IP-Netzwerks über eine ausgehende HTTPS-Verbindung zu der vordefinierten URL, die auf den Webserver (S1, S2) zeigt, welcher den Kommunikationswebdienst (CCL) bereitstellt, auf ihn zugreift, wobei die Gateway-IP-Vorrichtung eine Schnittstelle mit einem Feldbus aufweist, der Feldbusvorrichtungen (FDX, FDY, FDZ, FDB1 - FDB4) verbindet; und
wobei der Kommunikationswebdienst (CCL) eine Tunnelverbindung zwischen dem Adapterdienst (AS1 - AS4) und einer Feldbusvorrichtung (FDX, FDY, FDZ, FDB1 - FDB4) bereitstellt, um einem Feldbus-Tool (T1 - T9) Zugriff auf die Feldbusvorrichtung (FDX, FDY, FDZ, FDB1 - FDB4) zu gewähren;
wobei der Kommunikationswebdienst (CCL) dafür konfiguriert ist, eine Liste von Zugriffsrechten zu führen, welche definieren, welche Feldbus-Tools (T1 - T9) Zugriff auf welche Feldbusvorrichtung (FDX, FDY, FDZ, FDB1 - FDB4) haben,
wobei es im Fall von Feldproblemen möglich ist, die Zugriffsrechte auf Feldbusvorrichtungen (FDX, FDY, FDZ, FDB1 - FDB4) an einem zentralen Ort in dem Kommunikationswebdienst (CCL) durch eine zentralisierte Verwaltung von Benutzerzugriffsrechten augenblicklich zu ändern.

14. Client (C1 - C4), welcher dafür konfiguriert ist, einen Adapterdienst (AS1 - AS4) eines lokalen IP-Netzwerks bereitzustellen und eine ausgehende HTTPS-Verbindung zu einer vordefinierten URL, die auf einen Webserver (S1, S2) zeigt, der einen Kommunikationswebdienst (CCL) bereitstellt, zu initiieren, wobei der Client (C1 - C4) dafür konfiguriert ist, als ein Gateway zu agieren, das mit Feldbusvorrichtungen (FDX, FDY, FDZ, FDB1 - FDB4) des lokalen IP-Netzwerks verbunden ist, um einem Feldbus-Tool, das sich in einem weiteren lokalen IP-Netzwerk befindet, Zugriff auf die Feldbusvorrichtungen (FDX, FDY, FDZ, FDB1 - FDB4) des lokalen IP-Netzwerks zu gewähren, und ferner dafür konfiguriert ist, über den Kommunikationswebdienst (CCL) eine Tunnelverbindung zwischen dem Adapterdienst (AS1 - AS4) und einer Feldbusvorrichtung (FDX, FDY, FDZ, FDB1 - FDB4) zu erzeugen.

15. Client (C1 - C4) nach Anspruch 14, wobei der Client (C1 - C4) als ein Gateway für Feldbus-Tools (T1 - T9) in dem jeweiligen lokalen IP-Netzwerk agiert.

16. Client (C1 - C4) nach Anspruch 14, wobei der Client eine Gateway-IP-Vorrichtung in einem IP-Netzwerk ist, wobei die Gateway-IP-Vorrichtung (ID1, ID2) eine Schnittstelle mit einem Feldbus (FB1 - FB3) aufweist, der die Feldbusvorrichtungen (FDX, FDY, FDZ, FDB1 - FDB4) verbindet.

## Revendications

1. Procédé de fourniture d'une communication de réseau entre des dispositifs IP (D1 - D6, ID1 - ID3) par l'intermédiaire de l'Internet (I), les dispositifs IP (D1 - D6, ID1 - ID3) étant installés dans différents réseaux IP locaux (N1 - N9), et au moins un des dispositifs IP (D1 - D6, ID1 - ID3) étant un dispositif IP passerelle (ID1, ID2) raccordé à un bus de terrain, le procédé comprenant :
le démarrage d'un service adaptateur (AS1 - AS4) à l'intérieur d'un réseau IP (N1 - N9), le service adaptateur (AS1 - AS4) étant configuré de façon à établir une connexion HTTPS sortante vers un URL prédéfini pointant vers un serveur web (S1, S2) qui fournit un service web de communication (CCL), et ledit service adaptateur (AS1 - AS4) agissant en tant que passerelle pour des outils de bus de terrain (T1 - T9) dans le réseau IP respectif (N1 - N9),
l'établissement d'une connexion HTTPS sortante vers l'URL prédéfini pointant vers le serveur web (S1, S2) qui fournit le service web de communication (CCL) par un dispositif IP passerelle (ID1, ID2) qui est interfacé avec un bus de terrain (FB1 - FB3) raccordant des dispositifs de bus de terrain (FDX, FDY, FDZ, FDB1 - FDB4), et
la création d'une connexion en tunnel entre le service adaptateur et un dispositif de bus de terrain (FDX, FDY, FDZ, FDB1 - FDB4) par l'intermédiaire du service web de communication (CCL) de façon à fournir un accès par un outil de bus de terrain (T1 - T9) à un dispositif de bus de terrain (FDX, FDY, FDZ, FDB1 - FDB4),
dans lequel le service web de communication (CCL) entretient une liste de droits d'accès qui définit quels utilisateurs ont accès à quel dispositif de bus de terrain (FDX, FDY, FDZ, FDB1 - FDB4),
dans lequel, en cas de problèmes de terrain, il est possible de modifier instantanément les droits d'accès à des dispositifs de bus de terrain (FDX, FDY, FDZ, FDB1 - FDB4), au niveau d'un emplacement central dans le service web de communication (CCL) par une gestion centralisée de droits d'accès d'utilisateur.

2. Procédé selon la revendication 1, dans lequel le service web de communication (CCL) fournit une pluralité de tunnels vers différents dispositifs simultanément.

3. Procédé selon l'une quelconque des revendications précédentes, dans lequel le dispositif IP passerelle est un nœud d'un réseau IP domotique (N1 - N9).

4. Procédé selon l'une quelconque des revendications précédentes, dans lequel le service web de communication (CCL) est hébergé sur un ou plusieurs serveurs (S1, S2) à l'extérieur des composants participants.

5. Procédé selon l'une quelconque des revendications précédentes, dans lequel le service web de communication (CCL) est basé sur des infrastructures de grille de données en mémoire et des infrastructures de persistance.

6. Procédé selon l'une quelconque des revendications précédentes, dans lequel la communication entre l'un quelconque des outils de bus de terrain (T1 - T9) et le dispositif de bus de terrain respectif (FDX, FDY, FDZ, FDB1 - FDB4) est commandée par le service web de communication (CCL).

7. Procédé selon l'une quelconque des revendications précédentes, dans lequel la liste de droits d'accès est gérée par une interface utilisateur de type web.

8. Service web de communication (CCL) destiné à la fourniture d'un service de communication entre des dispositifs IP par l'intermédiaire de l'Internet (I),
dans lequel le service web de communication (CCL) est configuré de façon à être accédé par un service adaptateur (AS1 - AS4) d'un réseau IP local par l'intermédiaire d'une connexion HTTPS sortante vers un URL prédéfini pointant vers un serveur web (S1, S2) qui fournit le service web de communication (CCL), ledit service adaptateur (AS1 - AS4) agissant en tant que passerelle pour des outils de bus de terrain installés dans le réseau IP local (N1 - N9), et
dans lequel le service web de communication (CCL) est configuré de façon à être accédé par un dispositif IP passerelle (ID1, ID2) d'un autre réseau IP local par l'intermédiaire d'une connexion HTTPS sortante vers l'URL prédéfini pointant vers le serveur web (S1, S2) qui fournit le service web de communication (CCL), le dispositif IP passerelle (ID1, ID2) étant interfacé avec un bus de terrain raccordant des dispositifs de bus de terrain (FDX, FDY, FDZ, FDB1 - FDB4), et
dans lequel le service web de communication (CCL) fournit une connexion en tunnel entre le service adaptateur (AS1 - AS4) et un dispositif de bus de terrain (FDX, FDY, FDZ, FDB1 - FDB4) de façon à fournir un accès par l'outil de bus de terrain (T1 - T9) au dispositif de bus de terrain (FDX, FDY, FDZ, FDB1 - FDB4),
dans lequel le service web de communication (CCL) est configuré de façon à entretenir une liste de droits d'accès qui définit quels outils de bus de terrain (T1 - T9) ont accès à quel dispositif de bus de terrain (FDX, FDY, FDZ, FDB1 - FDB4),
dans lequel, en cas de problèmes de terrain, il est possible de modifier instantanément les droits d'accès à des dispositifs de bus de terrain (FDX, FDY, FDZ, FDB1 - FDB4), au niveau d'un emplacement central dans le service web de communication (CCL) par une gestion centralisée de droits d'accès d'utilisateur.

9. Service web de communication selon la revendication 8, dans lequel le service web de communication (CCL) est hébergé sur un ou plusieurs serveurs (S1, S2) à l'extérieur des dispositifs IP.

10. Service web de communication selon la revendication 8 ou 9, dans lequel le service web de communication (CCL) est basé sur des infrastructures de grille de données en mémoire et des infrastructures de persistance.

11. Service web de communication selon l'une quelconque des revendications 8 à 10, dans lequel le dispositif IP passerelle (ID1, ID2) est un nœud d'un réseau IP domotique (N1 - N9).

12. Service web de communication selon l'une quelconque des revendications 8 à 11, dans lequel le service web de communication (CCL) fournit une pluralité de tunnels à différents dispositifs IP simultanément.

13. Serveur web (S1, S2), configuré de façon à héberger un service web de communication (CCL) destiné à la fourniture d'un service de communication entre des dispositifs IP par l'intermédiaire de l'Internet (I),
dans lequel le service web de communication (CCL) est configuré de façon à être accédé par un service adaptateur (AS1 - AS4) d'un réseau IP local par l'intermédiaire d'une connexion HTTPS sortante vers un URL prédéfini pointant vers le serveur web (S1, S2) qui fournit le service web de communication (CCL), ledit service adaptateur (AS1 - AS4) agissant en tant que passerelle pour des outils de bus de terrain (T1 - T9) installés dans le réseau IP local, et
dans lequel le service web de communication (CCL) est configuré de façon à être accédé par un dispositif IP passerelle d'un autre réseau IP local par l'intermédiaire d'une connexion HTTPS sortante vers l'URL prédéfini pointant vers le serveur web (S1, S2) qui fournit le service web de communication (CCL), le dispositif IP passerelle étant interfacé avec un bus de terrain raccordant des dispositifs de bus de terrain (FDX, FDY, FDZ, FDB1 - FDB4), et
dans lequel le service web de communication (CCL) fournit une connexion en tunnel entre le service adaptateur (AS1 - AS4) et un dispositif de bus de terrain (FDX, FDY, FDZ, FDB1 - FDB4) de façon à fournir un accès par un outil de bus de terrain (T1 - T9) au dispositif de bus de terrain (FDX, FDY, FDZ, FDB1 - FDB4),
dans lequel le service web de communication (CCL) est configuré de façon à entretenir une liste de droits d'accès qui définit quels outils de bus de terrain (T1 - T9) ont accès à quel dispositif de bus de terrain (FDX, FDY, FDZ, FDB1 - FDB4),
dans lequel, en cas de problèmes de terrain, il est possible de modifier instantanément les droits d'accès à des dispositifs de bus de terrain (FDX, FDY, FDZ, FDB1 - FDB4), au niveau d'un emplacement central dans le service web de communication (CCL) par une gestion centralisée de droits d'accès d'utilisateur.

14. Client (C1 - C4), configuré de façon à fournir un service adaptateur (AS1 - AS4) d'un réseau IP local et à établir une connexion HTTPS sortante vers un URL prédéfini pointant vers un serveur web (S1, S2) fournissant un service web de communication (CCL), le client (C1 - C4) étant configuré de façon à agir en tant que passerelle raccordée à des dispositifs de bus de terrain (FDX, FDY, FDZ, FDB1 - FDB4) du réseau IP local de façon à fournir à un outil de bus de terrain installé dans un autre réseau IP local un accès aux dispositifs de bus de terrain (FDX, FDY, FDZ, FDB1 - FDB4) du réseau IP local, et est configuré en outre de façon à créer, par l'intermédiaire du service web de communication (CCL), une connexion en tunnel entre le service adaptateur (AS1 - AS4) et un dispositif de bus de terrain (FDX, FDY, FDZ, FDB1 - FDB4)

15. Client (C1 - C4) selon la revendication 14, dans lequel le client (C1 - C4) agit en tant que passerelle pour des outils de bus de terrain (T1 - T9) dans le réseau IP local respectif.

16. Client (C1 - C4) selon la revendication 14, dans lequel le client est un dispositif IP passerelle dans un réseau IP, le dispositif IP passerelle (ID1, ID2) étant interfacé avec un bus de terrain (FB1 - FB3) raccordant les dispositifs de bus de terrain (FDX, FDY, FDZ, FDB1 - FDB4).
